Europäisches Patentamt

European Patent Office

Office européen des brevets

(11) Publication number: 0 375 823
A1

# EUROPEAN PATENT APPLICATION

(21) Application number: 88630234.8

(22) Date of filing: 16.12.88

(51) Int. Cl.5: C08G 18/42, C08G 18/62,
C08G 18/79, C09D 175/04,
B05D 5/06, B05D 7/16

(43) Date of publication of application:
04.07.90 Bulletin 90/27

(84) Designated Contracting States:
AT BE CH DE ES FR GB IT LI NL SE

(71) Applicant: BASF Corporation
1255 Broad Street
Clifton New Jersey 07015(US)

(72) Inventor: Thieben, Lawrence E.
1036 Michigan Avenue
Waterville Ohio 43566(US)
Inventor: Larrow, Douglas H.
677 Smith Road
Temperance Michigan 48182(US)
Inventor: Latham, Robert G.
5970 Whiteacre Road
Toledo Ohio 43615(US)
Inventor: Braun, David W.
112 South River Road
Waterville Ohio 43566(US)

(74) Representative: Schmitz, Jean-Marie et al
OFFICE DENNEMEYER S.à.r.l. P.O. Box 1502
L-1015 Luxembourg(LU)

(54) Polyurethane coating composition.

(57) Acrylic and polyester polyurethanes are disclosed that are used in automotive paint topcoats. The clearcoats provide superior adhesion to basecoats typically used in autmotive paints.

EP 0 375 823 A1

# POLYURETHANE COATING COMPOSITION

## BACKGROUND OF THE INVENTION

This invention is directed to a polyurethane coating composition and in particular to an improved acrylic - polyurethane and polyester polyurethane coating composition.

Acrylic polyurethane coating compositions are well known and have been widely used to finish and repair finishes on automobiles and trucks. One particular high quality acrylic polyurethane coating composition described in Vasta U.S. Pat. No. 3,558,564 issued Jan. 26, 1971 has been widely used for finishing, refinishing and repairing automobiles and trucks. Another high quality polyurethane finish containing metallic flake pigments that provides excellent glamour and a high quality appearance and is used to finish automobiles and trucks is described in Crawley et al U.S. Pat. No. 4,131,571 issued Dec. 26, 1978. In addition U.S. patents 4,317,895 and 4,318,833 describe acrylic-polyurethane coating compositions that have found utility in automotive paints. There is a need for compositions with improved durability and weatherability which is provided by this invention.

Polyester polyurethanes are also well known. For example, U.S. Patent 4,423,179 describes a dimer acid based polyester polyurethane that has found wide applicability in automotive paints.

## SUMMARY OF THE INVENTION

The present invention is directed to acrylic and polyester polyurethane clear coat compositions that can be used as automotive paint topcoats. The resultant clear coating exhibits superior adhesion to basecoats typically used in automotive coatings.

## DESCRIPTION OF THE INVENTION

The present invention is directed to acrylic and polyester polyurethane clear coat coating compositions. These compositions can be used in automotive topcoat compositions and in particular automotive refinish topcoat compositions.

The nature of the film-forming polymer of both basecoat and topcoat compositions may in general be of any suitable film-forming polymer, which may be of either the thermosetting or the thermoplastic type. One suitable class of polymer consists of those which are derived from one or more ethylenically unsaturated monomers. Particularly useful members of this class are the acrylic addition polymers which are well-established for the production of coatings in the automobile industry, that is to say polymers or copolymers of one or more alkyl esters of acrylic acid or methacrylic acid, optionally together with other ethylenically unsaturated monomers. Suitable acrylic esters include methyl methacrylate, ethyl methacrylate, propylmethacrylate, butyl methacrylate, ethyl acrylate, butyl acrylate and 2-ethylhexyl acrylate. Suitable other, copolymerisable monomers include vinyl acetate, vinyl propionate, acrylonitrile, styrene and vinyl toulene. Where the acrylic polymer is required to be of the thermosetting cross-linking type, suitable functional monomers to be used in addition to the latter include acrylic acid, hydroxyethyl acrylate, hydroxethyl methacrylate, 2-hydroxpropyl acrylate, 2-hydroxpropyl methacrylate, N-(alkoxymethyl) acrylamides and N-(alkoxymethyl) acrylamides and N-(alkoxymethyl)methacrylamides, where the alkoxy groups may be, for example, a butoxy group, glycidyl acrylate and glycidyl methacrylate. The topcoat composition may in such a case contain also a crosslinking agent such as a polyfunctional isocyanate.

Both the topcoat and basecoat composition may incorporate a suitable catalyst for the crosslinking reaction between the acrylic polymer and the crosslinking agent, for example an active-metal salt (i.e., zinc octoate or dibutyl tin dilaurate) or tertiary amine.

The topcoat and basecoat polymer may be either in solution or in stable dispersion in the volatile carrier liquid of the topcoat composition. In other words, the carrier liquid may be either a solvent or a non-solvent for the topcoat polymer. Where the liquid is to be a solvent, it may be any of the organic liquids, or mixtures of organic liquids, which are conveniently used as polymer solvents in coating composition, for example aliphatic hydrocarbons such as hexane and heptane, aromatic hydrocarbons such as toluene and xylene, and petroleum fractions of various boiling point ranges which are predominantly aliphatic but have a significant aromatic content, esters such as butyl acetate, ethylene glycol diacetate and 2-ethoxyethyl acetate, ketones such as acetone and methyl isobutyl ketone.

The actual liquid or mixture of liquids selected as the carrier liquid will depend upon the nature of the topcoat polymer, according to principles which are well-known in the coatings art, in order that the polymer shall be soluble in liquid. Where the carrier liquid is to be an organic non-solvent, it will tend to be of rather lower polarity than those just mentioned and may consist of one or more aliphatic hydrocarbons such as hexane, heptane or petroleum fractions of low aromatic content, optionally in admixture with liquids of high polarity such as have already been referred to, provided that the total mixture is a non-solvent for the topcoat polymer. In such a case, the topcoat composition will be a non-aqueous polymer dispersion, and this will in general be a sterically stabilised dispersion in which the polymer particles are stabilised by means of a block or graft copolymer, one polymeric constituent of which is non-solvatable by that liquid and is associated with the disperse polymer.

Usually, the topcoat composition will be substantially colourless so that the pigmentation effect due to the basecoat is not significantly modified, but it may be desirable in some cases, more usually where the basecoat contains a metallic pigment, to provide a transparent tinting of a topcoat composition.

Acrylic and polyester polyurethane clearcoat compositions have been found to be especially useful as automotive topcoat compositions. Clearcoats of this type provide superior adhesion to basecoats typically used in automotive paint compositions.

In the first operational step of the process of the invention, the basecoat composition is applied to the surface of the substrate, which may be previously primed or otherwise treated as conventional in the art. The substrates which are of principal interest in the context of the invention are metals such as steel, aluminium, or plastics which are commonly used for the fabrication of automobile bodies, but other materials such as glass, ceramics, and wood can be used. After application of the basecoat composition, a polymer film is formed therefrom upon the surface of the substrate. If desired, this may be achievd by subjecting the substrate and the applied coating to heat in order to volatilise the water and any organic liquid diluent therein, and it lies within the scope of the invention if desirable to employ a heating temperature sufficient to crosslink the basecoat film in those cases where the composition contains a film-forming material of the ambient cure type. However, a particular merit of the present invention is that it is sufficient to allow only a short period of drying in order to ensure that the topcoat composition can be applied to the basecoat film without there being any tendency for the former to mix with or dissolve the latter in a way which can, for example, interfere with the correct orientation of metallic pigmentation, whereby optimum "flip" effect is achieved. Suitable drying in any individual case will depend, inter alia, on the ambient humidity but in general a drying time of from 1 to 5 minutes at a temperature of from 15° to 60°C will be adequate to ensure that mixing of the two coats is prevented. At the same time, the basecoat film is adequately wetted by the topcoat composition, so that satisfactory inter-coat adhesion is obtained.

After application of the topcoat composition to the basecoat film, the coated substrate may be subjected to ambient cure or forced drying operation in which the volatile carrier liquid of the topcoat is driven off and optionally in which the film-forming material of the topcoat and/or that of the basecoat, is crosslinked with the aid of the crosslinking agent(s) present. This heating or curing operation is usually carried out at a temperature in the range 20° - 70°C, but, if desired, a lower temperature this may be employed provided it is sufficient to activate any necessary crosslinking mechanism.

In performing the process of the invention, the basecoat and topcoat compositions may be applied to the substrate by any of the conventional techniques such as brushing, spraying, dipping or flowing, but it is preferred that spray application be used since the best results are thereby achieved in regard to both pigment control, especially of metallic pigment orientation, and gloss. Any of the known spray procedures may be adopted, such as compressed air spraying, electrostatic spraying, electrostatic spraying, hot spraying and airless spraying, and either manual or automatic methods are suitable.

The thickness of the basecoat film applied is preferable from 0.5 to 1.5 mls and that of the topcoat from 1 to 3 mils (dry film thickness in each case).

The following examples illustrate the invention with the percentages in weight percent.

EXAMPLE 1

POLYESTER POLYURETHANE

A polyurethane with improved repairability, adhesion and lower monomer concentration in a polyurethane clearcoating was prepared.

A polyurethane made up of component A (polyester, CAB) and component B (an adduct of isophorone diisocyanate i.e., Cargill 4508) were mixed together and this applied to an automobile. A clear coating was obtained that had marginal adhesion, repairability and cure, but when a component B was used made up of an isocyanurate trimer of hexamethylene diisocyanate (i.e., Rhone-Polenc HDT-90) then adhesion improved, repairability greatly improved and cure improved. The use of this isocyanurate greatly diminishes the isocyanate monomer concentration since the use of the adduct of IPDI has a published monomer concentration of 3.0% and the isocyanurate has a published monomer concentration of 0.2% thus a coating made from this isocyanurate would have less free monomer.

The polyester resin used in component A consists of:

| 2-ethyl-hexanoic acid | 27.0% |
|---|---|
| Phthalic Anhyride | 30.5% |
| Trimethylol Propane | 42.5% |
| | 100.0% |

The fixed vehicle content of component A:

| Polyester resin above | 42.9% |
|---|---|
| CAB 551.01 | 57.1% |
| | 100.0% |

The fixed vehicle content of component A and B:

| Polyester resin above | 20.6% |
|---|---|
| CAB 551.01 | 27.4% |
| IPDI adduct (Cargill 4508) | 52.0% |
| | 100.0% |

EXAMPLE 2

ACRYLIC POLYURETHANE

Claim: A polyurethane with improved adhesion, flexibility, cure, and lower monomer concentration in polyurethane clear coatings was prepared through set acrylic.

An acrylic polyurethane made up of a component A (TSA resin, Cellulose acetate butyrate) and component B (an adduct of isophrone diisocyanate i.e., Cargill 4508) when mixed together and applied to an automobile gave a clear coating that had marginal adhesion and cure, but when a component B was used made up of an isocyanurate trimer of hexamethylene diisocyanate (U.S. reference i.e., Rhone-Poulenc HDT-90) then adhesion greatly improved and cure response improved. The use of this isocyanurate greatly diminishes the isocyanate monomer concentration since the use of the adduct of IPDI has a published monomer concentration of 3.0% and the isocyanurate has a published monomer concentration of 0.2% thus a coating from this isocyanurate would have less monomer.

The TSA resin used in component A consists of:

| | |
|---|---|
| 33.3% | MMA |
| 18.7% | BMA |
| 33.9% | HPMA |
| 14.2% | STY |

Fixed vehicle content of component A:

| | |
|---|---|
| TSA resin above | 87.6% |
| CAB 551.01 | 2.4% |
| Butyl Benzyl Phthalate | 100.0% |

Fixed vehicle content of component A and B:

| | |
|---|---|
| TSA resin above | 56.7% |
| CAB 551.01 | 6.5% |
| Butyl Benzyl Phthalate | 1.6% |
| IPDI adduct Cargill 4508 | 35.2% |
| | 100.0% |

## Claims

1. An automotive clear coat composition consisting of a polyester-polyurethane coating composition.

2. The composition of claim 1 wherein the polyester is formed from an acid selected from the group consisting of hexanoic and dimer acid.

3. An automotive clear coat composition consisting of an acrylic-polyurethane coating composition.

4. The composition of claim 3 wherein the acrylic is selected from methyl methacylate, butyl methacrylate and styrene and hydroxy propyl methacrylate.

5

<table>
<tr><th colspan="2" align="center">European Patent Office</th><th align="center">EUROPEAN SEARCH REPORT</th><th>Application number</th></tr>
</table>

EP 88 63 0234

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 036 975 (BAYER)<br><br>* Claim 1; page 4, line 6 - page 7, line 2, lines 10-20; page 12, line 21 - page 13, line 8; page 15, lines 1-16; example 4 *<br><br>-- | 1,2 | C 08 G 18/42<br>C 08 G 18/62<br>C 08 G 18/79<br>C 09 D 175/04<br>B 05 D 5/06<br>B 05 D 7/16 |
| X | US-A-4 442 256 (L.I. MILLER)<br><br>* Claims 1-5,7; column 2, lines 41-45; column 3, lines 1-38; column 4, lines 4-27 *<br><br>-- | 1 | |
| X | DE-A-3 532 864 (BASF)<br><br>* Claims 1,2; page 2, lines 45-63; page 3, lines 21-43 *<br><br>-- | 1 | |
| X | US-A-4 384 103 (M.S. CHATTHA)<br><br>* Claims 1,19,31,32; column 1, lines 43-50; column 6, lines 3-5; column 8, lines 48-58 *<br><br>-- | 1 | **TECHNICAL FIELDS SEARCHED (Int Cl 4)**<br><br>C 08 G<br>C 09 D<br>B 05 D |
| A,D | US-A-4 423 179 (M. GUAGIARDO)<br><br>* Claim 1; column 3, line 12 - column 4, line 62; column 7, lines 7-24 *<br><br>-- | 1 | |
| A | DE-A-1 494 404 (ALLIED CHEM. CORP.)<br><br>* Claim 1; page 3, paragraph 2 - page 4, paragraph 1; example 3 *<br><br>-------------- | 1 | |

~~The present search report has been drawn up for all claims~~

| Place of search | Date of completion of the search | Examiner |
|---|---|---|
| THE HAGUE | 25-07-1989 | VAN PUYMBROECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82